# EUROPEAN PATENT SPECIFICATION

(11) **EP 2 522 526 B1**
(45) Date of publication and mention of the grant of the patent: **25.02.2015**
(21) Application number: 12166353.8
(22) Date of filing: 02.05.2012
(51) Int. Cl.: B41M 3/00, C09D 11/00

(54) **Storage stable images**
Lagerbeständige Bilder
Images stables au stockage

(30) Priority: 13.05.2011 US 201113107704
(43) Date of publication of application: 14.11.2012
(73) Proprietor: Xerox Corporation, Rochester, New York 14644 (US)
(72) Inventor: Mahabadi, Hadi, Mississauga, Ontario L5M 6C2 (CA); Smith, Paul, Oakville, Ontario L6J 2G2 (CA); Wu, Yiliang, Oakville, Ontario L6H 0C6 (CA)
(74) Representative: Jones, Helen M.M.

(56) References cited:
- WO-A1-99/35207
- JP-A- 62 028 941
- US-A- 3 969 549
- US-A1- 2009 148 600
- US-A1- 2009 181 183

## Description

### FIELD

The instant disclosure relates to the use of an ink comprising a metal or metal nanoparticles to print images on durable receiving media or substrates to provide documents with long term stability.

### BACKGROUND

Recorded history is a history of documentation; persons and institutions keep information in recorded form for later retrieval. The documents and records are descriptions of events, financial transactions, scientific data, plans, blueprints, government proceedings, stories, opinions and the like for present or future benefit.

In the last 50 years, computer systems and information automation have moved work processes and records into a digital format for electronic storage. Electronic records, however, do not have the same longevity properties as physical documents, and many problems remain (e.g., system failure and site failure through catastrophic events. It is important, then, to be able to retain certain records, and to ensure their legibility, interpretability, availability and provable authenticity, over periods of time.

The desired lifetime of personal and business records ranges from weeks to months to years, and in some cases, to decades, to centuries. Thus, it is important to protect records against events which are foreseeable within those time frames. However, while it can be difficult to imagine information preservation for centuries or millennia (e.g., documents, including but not limited to, government activity records, military related documents, design and blueprints for special architecture, machine and structural objectives), there is a need to develop methods and systems for such long term information preservation.

### SUMMARY

The present disclosure describes, inter alia, materials and methods for long term preservation of records in document form, where such records need to be preserved for periods over 5yrs, over 10yrs, over 30yrs, over 50yrs or more. Such materials and methods as disclosed make use of metal or metal nanoparticle inks to print on durable media permanent documents or documents which may be preserved for such periods as described, where documents generated by these methods are made resistant to physical and chemical insult.

In embodiments, a method and a material for preserving records is disclosed including contacting an ink on one or more surfaces of a durable medium to form a record composed of symbols, words, tracings, blueprints, schematics, graphics, glyphs, dots, formulae, images, pixels, codes, figures, patterns, including tactile discernable patterns, letters, numbers, or combinations thereof, where the ink includes one or more metal nanoparticles containing a metal core which includes, but is not limited to, a noble metal, a transition metal, a metalloid, a metal alloy and combinations thereof; a vehicle, which can comprise one or more solvents, in embodiments, a first solvent and an optional second solvent, where said solvents vaporize below a sintering or melting temperature; and an optional adhesive; sintering said metal nanoparticles at the one or more contacted surfaces of the medium; and optionally applying a coating over the sintered metal on said one or more surfaces. The resulting sintered metal volitionally deposited in a pattern or form protects the integrity of said record against physical and chemical insult.

In embodiments, a noble metal includes Ag, Au, Pd, Pt, Rh, Ir, Ru, Os and combinations thereof. In embodiments, a transition metal includes Ti, Cr, Mn, Fe, Co, Ni, Cu, Zn, Nb, Mo, Ta, W, Re and combinations thereof.

In embodiments, an alloy includes a noble metal and a transition metal. In embodiments, the noble metal is Ag.

In embodiments, the vehicle comprises a first and an optional second solvent. The solvents can comprise an aromatic hydrocarbon containing from about 7 to about 18 carbon atoms, a linear or a branched aliphatic hydrocarbon containing from about 8 to about 28 carbon atoms or a cyclic aliphatic hydrocarbon. In embodiments, a solvent can be a monocyclic hydrocarbon or a polycylic hydrocarbon. A monocyclic hydrocarbon includes a cyclic terpene, a cyclic terpinene, and a substituted cyclohexane. A polycyclic hydrocarbon include those with separate ring systems, combined ring systems, fused ring systems and bridged ring systems. In embodiments, the first and optional second solvents include bicyclopropyl, bicyclopentyl, bicyclohexyl, cyclopentylcyclohexane, spiro[2,2]heptane, spiro[2,3]hexane, spiro[2,4]heptane, spiro[3,3]heptane, spiro[3,4]octane, bicyclo[4,2,0]octanehydroindane, decahydronaphthalene, perhydrophenanthroline, perhydroanthracene, norpinane, norbornane and bicyclo[2,2,1]octane.

In embodiments, the first aliphatic polycarbocyclic solvent is decahydronaphthalene and the optional second aliphatic polycarbocyclic solvent is bicyclohexyl.

In embodiments, the optional adhesive includes a terpene resin, styrene-butadiene-styrene copolymer, styrene-isoprene-styrene copolymer, styrene-ethylene/butylenes-styrene copolymer, styrene-ethylene/propylene copolymer, ethylene-vinyl acetate copolymers, ethylene-vinyl acetate-maleic anhydride terpolymer, ethylene butyl acrylate copolymer, ethylene-acrylic acid copolymer, polyolefins, polybutene, polyamides and combinations thereof.

In embodiments, the medium is a durable medium and includes a metal, a metal foil, where the metal can be molybdenum, aluminum, beryllium, cadmium, cerium, chromium, cobalt, copper, gallium, gold, lead, manganese, molybdenum, nickel, palladium, platinum, rhenium, rhodium, silver, stainless steel, steel, iron, strontium, tin, titanium, tungsten, yttrium, zinc, zirconium, a metal alloy, brass or bronze, a metal silicide, a metal carbide, a polymer, a plastic, a conductive polymer, a copolymer, a polymer blend, a polyethylene terephthalate, a polycarbonate, a polyester, a polyester film, a mylar, a polyvinyl chloride, a polyvinyl fluoride, polyvinylidene fluoride, a polyethylene, a polyetherimide, a polyethersulfone (PES), a polyetherketone, a polyimide, a polyvinylchloride, an acrylonitrile butadiene styrene polymer, a polytetrafluoroethylene, a polydimethylsiloxane, a silicone, an epoxy, a durable paper, a coated paper, a pozzolana, a clay, a sand, a gravel, a perlite, a vermiculite, a mineral wool, a graphite, an aluminosilicate, a mica, a silicon, a glass, a sapphire, an organometal, a cellulose, a wood, a fiber, a bark, a fruit shell, a skin, a ceramic and combinations thereof The medium can be in any form or shape, and can be, for example, flat, contoured and so on; can be smooth or textured; can be bendable, flexible or not and so on.

In embodiments, the coating may include polymethyl methacrylate (PMMA), polyethyl methacrylate (PEMA), polyphenylene oxide (PPO), polyphenylene sulphide (PPS), polypropylene, polyvinyl chloride (PVC), polyethylene naphthalate (PEN), epoxy resins, polycarbonates (PC), polyimides, polydicyclopentadiene (PDCPD), silicones, polydimethylsiloxane (PDMS), polyurethanes, polyisobutylene, polychloroprene (PCP), polybutadiene, polyisoprene (PI); natural polymers, cellulose, latex, starch, polyesters, polyethylene terephthalate (PET), cationic polyelectrolytes, poly-L-lysine (PLL), polyetheretherketone (PEEK), polyallylamine (PAH), anionic polyelectrolytes, poly-L-glutamic acid (PGA), polystyrene sulphonate (PSS), polyketones, poly(aryl ether ketones), polyamides, polyaramides, polyacrylonitriles, polycyanoacrylates, polyethersulphones (PES), polystyrene (PS), polytetrafluoroethylene (PTFE), polyethylene, polyvinylpyrrolidone (PVP), polyvinyl acetate (PVA or PVAc), crosslinked polymers, branched polymers, star polymers, copolymers, dendrimers and combinations thereof. The coating generally is clear or transparent, but can be translucent, and can have a glossy or matte finish.

In embodiments, a method for preserving records is disclosed including contacting an ink on one or more surfaces of a medium and forming a record composed of symbols, tracings, blueprints, schematics, words, graphics, glyphs, dots, formulas, images, pixels, codes, figures, patterns, letters, numbers or combinations thereof, where the ink comprises a plurality of metal nanoparticles, in embodiments, silver nanoparticles, decahydronaphthalene, bicyclohexyl and an optional adhesive; heating the contacted ink for a sufficient period of time to form a coherent silver mass at the one or more contacted surfaces of the medium; and applying an optional coating onto the silver mass on said one or more surfaces; where the resulting patterned silver mass affords long term preservation of said record.

In embodiments, the contacting is performed by printing the ink on a durable medium using an inkjet printer. In an embodiment, the medium is a plastic medium and the ink is heated or sintered at a temperature less than 200° C. In an embodiment, the ink is heated from for about 0.1 second to about 30 min.

In embodiments, the medium is a polycarbonate (PC), a PEEK a polyethylene terephthalate (PET), a PEN, a polyethersulfone (PES), a polyimide, a polyurethane and the like.

In embodiments, a printed record on a plastic medium generated by the methods as described is disclosed, comprises a nanoparticle containing silver and the metal content of those areas of the printed, sintered record where ink is applied is predominantly metal, for example at least 50 wt%, at least 80wt%, at least about 90 wt%.

### DETAILED DESCRIPTION

The present disclosure describes materials and methods for preserving printed documents using metal nanoparticles and durable receiving members to form the durable documents.

In embodiments, a method for preserving records is disclosed including:
a) contacting an ink on one or more surfaces of a medium to form a record composed of symbols, tracings, blueprints, schematics, graphics, glyphs, dots, formulas, images, pixels, codes, figures, patterns, letters, numbers or combinations thereof, where the ink comprises one or more metal nanoparticles comprising a metal core which includes, but is not limited to, a noble metal, a transition metal, a metalloid, a metal alloy and combinations thereof; a vehicle; and an optional adhesive;
b) sintering said metal nanoparticles at the one or more contacted surfaces of the medium; and optionally
c) applying a coating onto the sintered metal on said one or more surfaces; where the resulting sintered-metal provides a durable record resistant against physical and chemical insult.

In the present disclosure, use of the singular includes the plural unless specifically stated otherwise. In the present disclosure, use of, "or," means, "and/or," unless stated otherwise. Furthermore, use of the term, "including," as well as other forms, such as, "includes," and, "included," is not limiting.

For the purposes of the instant disclosure, "ink," "developer," "toner composition," and "ink solution," are used interchangeably, and any particular or specific use and meaning will be evident from the context of the sentence, paragraph and the like in which the word or phrase appears. In one aspect, an ink comprises, for example, a pigment or a dye which is applied to a surface of a receiving medium as a liquid or as a solid to produce an image or a copy. Thus, for the purposes herein an ink comprises a toner. Also, an ink of interest can be a dry ink or solid ink. In embodiments, an ink is a liquid ink, such as, an aqueous ink or a solvent-based ink. In embodiments, an ink is a dry ink, such as, a solid ink or a toner. A, "vehicle," comprises the non-colorant portion of an ink of interest. Hence, a vehicle can comprise a resin, an organic solvent and so on. For the purposes of the disclosure, an ink can contain any of a number of additives so long as the metal content of the ink is substantial, and the additives generally do not impede the sintering of the ink on the durable surface, do not have a negative impact on the image and the durability thereof, and does not have a negative impact on any optional coating.

As used herein, "sintering," including grammatical variations thereof, means to cause a material to form a coherent mass by heating with or without melting. For example, such a material includes, but is not limited to, a metallic powder. In embodiments, such material includes metal nanoparticles containing a metal core including a noble metal, a transition metal, a metalloid, a metal alloy or combinations thereof.

As used herein, "record," including grammatical variations thereof, means anything providing permanent evidence of or information about past events. For example, a printed document which comprises or is composed of symbols, tracings, blueprints, schematics, graphics, glyphs, dots, formulas, images, pixels, codes, figures, patterns, including tactile discernable patterns, letters, numbers or combinations thereof would be embraced by such a term.

The term, "nano," as used in, "metal nanoparticles," indicates a particle size of less than about 1000nm. In embodiments, the metal nanoparticles have a particle size of from about 0.5nm to about 1000nm, from about 1nm to about 500nm, from about 1nm to about 100nm, from about 1nm to about 20nm. Particle size can be defined herein as the average diameter of the metal nanoparticles, as determined by, for example, TEM (transmission electron microscopy). A nanoparticle is any particulate carrying, containing and so on, a metal.

As used herein, "predominantly," is meant to indicate at least about 50%, at least about 75%, at least about 90%, at least about 95% or more. In the context of an ink deposited on a medium, determination of metal content is made relative to the site at or to which a known volume of an ink is applied and determined relative to the area of that site. In embodiments, the metal content is determined relative to the liquid formulation prior to deposition.

As used herein, the modifier, "about," used in connection with a quantity is inclusive of the stated value and has the meaning dictated by the context (for example, it includes at least the degree of error associated with the measurement of the particular quantity). When used in the context of a range, the modifier, "about," should also be considered as disclosing the range defined by the absolute values of the two endpoints. For example, the range "from about 2 to about 4" also discloses the range "from 2 to 4."

As used herein, "long term," includes from about 5 years to about 10 years, from about 10 to about 20 years, from about 20 to about 50 years, from about 50 to about 100 years, or greater than about 100 years.

As used herein, the term, "preservation," including grammatical variations thereof, means that the legibility, interpretability, availability and provable authenticity of a record is maintained over time, where such legibility, interpretability, availability, and provable authenticity may be determined by visual human examination, tactile human examination, and/or by audio, visual, optical, electrical, chemical, radiological, electromagnetic, and/or by tactile examination by machine and/or by computing device or combination thereof. In a related aspect, the record may be readable by visual human decoding, tactile human decoding, and/or by audio, visual, optical, electrical, chemical, radiological, electromagnetic, and/or by tactile decoding by machine and/or computing device or combination of the above.

As used herein, the term, "substrate or medium," may be used interchangeably, and means a solid or semi-solid or super-cooled liquid substance to which a second substance is applied and to which that second substance adheres. In embodiments, a substrate or a medium is a, "durable," substrate or medium, with a lifetime that is compatible with or exceeds the time frames for long term or longevity as taught herein, and includes certain papers, a plastic, a metal, a ceramic, a glass and so on. The substrate can be of any form, shape or presentation. The surface thereof can be smooth or textured. The substrate can be flexible, bendable or have varying degrees of stiffness as a design choice. Thus, a durable medium is one which retains or maintains the desired function over the time periods taught and desired herein, such as, at least five years, over five years or long term.

As used herein, the term, "integrity," including grammatical variations thereof, means a sound, near unimpaired, near original, near pristine, or near perfect condition.

Methods have been proposed for preparing metal particles. For example, metal nanoparticles can be synthesized using a photochemical process. U.S. Pat. No. 7,789,935 discloses a method of forming an ink comprising photochemically producing stabilized metallic nanoparticles and formulating the nanoparticles into an ink.

U.S. Pat. No. 7,749,300 discloses a method of photochemically producing bimetallic core-shell nanoparticles, which can be used, for example, in ink applications.

U. S. Pub. No. 20090142481 discloses a low-cost copper nanoparticle ink that can be annealed onto a paper substrate for RFID antenna applications using substituted dithiocarbonates as stabilizers during copper nanoparticle ink production.

U.S. Pat. No. 7,494,608 discloses a composition comprising a liquid and a plurality of silver-containing nanoparticles with a stabilizer, where the silver-containing nanoparticles are a product of a reaction of a silver compound with a reducing agent comprising a hydrazine compound in the presence of a thermally removable stabilizer in a reaction mixture comprising the silver compound, the reducing agent, the stabilizer, and an organic solvent where the hydrazine compound is a hydrocarbyl hydrazine, a hydrocarbyl hydrazine salt, a hydrazide, a carbazate, a sulfonohydrazide, or a mixture there and where the stabilizer includes an organoamine. See also U.S. Pat. No. 7,270,694.

U. S. Pub. No. 20090148600 discloses metal nanoparticles with a stabilizer complex of a carboxylic acid-amine on a surface thereof formed by reducing a metal carboxylate in the presence of an organoamine and a reducing agent compound. The metal carboxylate may include a carboxyl group having at least four carbon atoms and the amine may include an organo group having from 1 to about 20 carbon atoms.

U.S. Pub. No. 20110048171 discloses a method for producing metallic nanoparticles in a continuous flow-through reactor.

For the present disclosure, unprotected, uncoated metallic nanoparticles produced by any of the methods taught herein, referenced herein or as known in the art may be functionalized, such as, to carry a surface charge, by any suitable means known in the art. Moreover, the metallic nanoparticles may be stabilized. Stabilization of the particles may be achieved by adding stabilizing molecules directly to the aqueous solution containing the nanoparticles. Alternatively, the nanoparticles can be extracted into an organic solvent containing the stabilizing molecules. For example, copper nanoparticles may be stabilized with a substituted dithiocarbonate. In embodiments, silver nanoparticles may be stabilized with organic stabilizers. The term, "organic," in, "organic stabilizer," refers to, for example, the presence of carbon atom(s), but the organic stabilizer may include one or more non-metal or non-carbon heteroatoms such as nitrogen, oxygen, sulfur, silicon, halogen and the like.

The organic stabilizer may be an organoamine stabilizer such as those described in U.S. Pat. No. 7,270,694. Examples of the organoamine are an alkylamine, such as, for example, butylamine, pentylamine, hexylamine, heptylamine, octylamine, nonylamine, decylamine, hexadecylamine, undecylamine, dodecylamine, tridecylamine, tetradecylamine, diaminopentane, diaminohexane, diaminoheptane, diaminooctane, diaminononane, diaminodecane, diaminooctane, dipropylamine, dibutylamine, dipentylamine, dihexylamine, diheptylamine, dioctylamine, dinonylamine, didecylamine, methylpropylamine, ethylpropylamine, propylbutylamine, ethylbutylamine, ethylpentylamine, propylpentylamine, butylpentylamine, tributylamine, trihexylamine and the like, or combinations thereof.

A metal nanoparticle may be stabilized with a stabilizer which is comprised of a formula (I): X-Y, where X is a hydrocarbon comprising at least about 4 carbon atoms, at least about 8 carbon atoms, at least about 12 carbon atoms, in embodiments, from about 4 to about 24 carbon atoms, in embodiments, from about 6 to about 20 carbon atoms, and Y is a functional group attached to a surface of the metal nanoparticle. Examples of the functional group, Y, include, for example, hydroxyl, amine, carboxylic acid, thiol and derivatives, -OC(=S)SH (xanthic acid), pyridine, pyrrolidone and the like. The organic stabilizer may include, but is not limited to, polyethylene glycols, polyvinylpyridine, polyvinylpyrrolidone and other organic surfactants. The organic stabilizer may include, but is not limited to, a thiol such as, for example, butanethiol, pentanethiol, hexanethiol, heptanethiol, octanethiol, decanethiol, and dodecanethiol; a dithiol such as, for example, 1,2-ethanedithiol, 1,3-propanedithiol, and 1,4-butanedithiol; or a mixture of a thiol and a dithiol. The organic stabilizer may be a xanthic acid such as, for example, o-methylxanthate, o-ethylxanthate, o-propylxanthic acid, o-butylxanthic acid, o-pentylxanthic acid, o-hexylxanthic acid, o-heptylxanthic acid, o-octylxanthic acid, o-nonylxanthic acid, o-decylxanthic acid, o-undecylxanthic acid, o-dodecylxanthic acid. Organic stabilizers containing a pyridine derivative (for example, dodecyl pyridine) and/or organophosphine that can stabilize metal nanoparticles also may be used as the stabilizer herein.

Further examples of organic stabilized metal nanoparticles may include: the carboxylic acid-organoamine complex-stabilized metal nanoparticles described in U.S. Pub. No. 2009/0148600; the carboxylic acid stabilizer metal nanoparticles described in U.S. Pub. No. 2007/0099357 A1, and the thermally removable stabilizer and the UV decomposable stabilizers described in U.S. Pat. App. Pub. No. 2009/0181183.

The extent of the coverage of stabilizer on the surface of the metal nanoparticles may vary, for example, from partial to full coverage depending on the capability of the stabilizer to stabilize the metal nanoparticles or as a design choice, for example, based on a desired property or presentation of a final product. Of course, there is variability as well in the extent of coverage of the stabilizer among the individual metal nanoparticles.

The weight percentage of the organic stabilizer in a metal nanoparticle (including only the metal particle and the stabilizer, excluding the solvent) may be from, for example, about 3 weight percent (wt%) to about 60wt%, from about 5wt% to about 35wt%, from about 5wt% to about 20wt%, from about 5wt% to about 10wt%. As a result, the weight percentage of the metal in the metal nanoparticle may be from, for example, about 40wt% to about 97wt%, from about 65wt% to about 95wt%, from about 80wt% to about 95wt%, from about 90wt% to about 95wt%.

In embodiments, the metal nanoparticles are composed of elemental silver or a silver composite. Besides silver, the silver composite may include either or both of (i) one or more other metals and (ii) one or more non-metals. Suitable other metals include, for example, Al, Au, Pt, Pd, Cu, Co, Cr, In and Ni, including the transition metals, for example, Ti, Cr, Mn, Fe, Co, Ni, Cu, Zn, Nb, Mo, Ta, W, Re, and combinations thereof. In embodiments, alloys are disclosed, which alloys may include noble metals, for example, Ag, Au, Pd, Pt, Rh, Ir, Ru, Os and combinations thereof, and a transition metal, for example, ranging from at least about 20% of the nanoparticles by weight or greater than about 50% of the nanoparticles by weight. The various components of the metal composite may be present in an amount ranging, for example, from about 0.01 % to about 99.9% by weight, from about 10% to about 90% by weight. The metal or metals used is a design choice so long as the ink is sinterable on the selected medium. Hence, a metal ink or sintered ink need not be conductive or have any other specific property normally ascribed to a metal aside from stability.

The weight percentage of the nanoparticles in the ink may be from, for example, about 5wt% to about 80wt%, from about 10wt% to about 60wt%, from about 20wt% to about 60wt%.

The various components of the metal composite may be present in an amount ranging, for example, from about 0.01 % to about 99.9% by weight, from about 10% to about 90% by weight.

In some embodiments, the stabilized metal nanoparticles are composed of elemental silver. The stabilized nanoparticles may have a silver content of about 70% or more, including from about 70% to about 90%, from about 75% to about 85% by weight. The content can be higher than that produced by conventional processes. The content can be analyzed with any suitable method. For example, the silver content can be obtained from thermogravimetric analysis or ashing method.

In embodiments of the present disclosure, silver nanoparticles are dissolved or dispersed in a vehicle, which, in embodiments, can comprise a mixture of a first solvent and an optional second solvent. The formulation provides a sinterable ink which may be applied to a medium to produce a document or a record comprising a substantial metal content that is resistant to chemical or physical/mechanical insult, including, but not limited to, exposure to water, organic solvents, plasma treatment, UV radiation, bending and/or folding and the like. In addition, a liquid ink formulation of the present disclosure can be jetted on a variety of substrate surfaces with different surface energies to yield the printed feature.

By, "substantial metal content," or the equivalent, "substantially metal," or forms thereof, is meant that for a given area or space, such as, a mm², totally covered with a uniform and thinnest layer of an ink of interest to essentially fill in the entire space, following sintering, the metal content of that square of residual ink material is, on a weight basis, at least about 50wt%, at least about 70wt%, at least about 90wt%, at least about 95wt%. In other embodiments, the metal content of an ink of interest can be greater than about 30 wt%, greater than about 40 wt%, greater than about 50 wt%, greater than about 60 wt%, greater than about 70 wt%, greater than about 80 wt% or more.

For a solvent-based ink, any suitable solvents can be used, including, water, alcohol, ketone, ester, ether, hydrocarbon, heteroatom-containing aromatic, and the like. Exemplary alcohols include methanol, ethanol, propanol, butanol, hexanol, octanol and the like. Exemplary ketones include acetone, acetophenone, butanone, ethyl isopropyl ketone, methyl isopropyl ketone, 3-pentanone, mesityl oxide and so on. Exemplary esters include ethyl acetate, methyl acetate, butyl acetate, ethyl lactate, diethyl carbonate, dioctyl terephthalate and so on. Exemplary ethers include tetrahydrofuran, tetrahydropyran, morpholine, dioxane, dimethoxyethane, methoxyethane and so on. Exemplary heteroatom-containing aromatic include chlorobenzene, chlorotoluene, dichlorobenzene, nitrotoluene, pyridine and so on. Other suitable solvents include N-methyl-2-pyrrolidone, N,N-dimethylformamide and so on. In some embodiments, the first and optional second solvent is selected from an aromatic hydrocarbon containing from about 7 to about 18 carbon atoms, a linear or a branched aliphatic hydrocarbon containing from about 8 to about 28 carbon atoms, a cyclic aliphatic hydrocarbon and so on. The solvents can be a monocyclic or a polycarbocyclic hydrocarbon. Monocyclic solvents include a cyclic terpene, a cyclic terpinene a substituted cyclohexane and so on. Polycyclic solvents include separate ring systems, combined ring systems, fused ring systems and bridged ring systems. In embodiments, the first and optional second polycarbocyclic solvent includes bicyclopropyl, bicyclopentyl, bicyclohexyl, cyclopentylcyclohexane, spiro[2,2]heptane, spiro[2,3]hexane, spiro[2,4]heptane, spiro[3,3]heptane, spiro[3,4]octane, bicyclo[4,2,0]octanehydroindane, decahydronaphthalene (bicyclo[4.4.0]decane or decalin), perhydrophenanthroline, perhydroanthracene, norpinane, norbornane, bicyclo[2,2,1]octane and so on, where the ink has a drying time in printer heads of from about 1hr to about 2mos, from about 5hrs to about 1mo, from about 5hrs to 1wk. In embodiments, the first and optional second solvents may contain saturated and unsaturated hydrocarbon rings, and may include, but are not limited to, tetraline, hexalin, cyclic terpene including monocyclic monoterpene, such as, limonene and selinene, together with bicyclic monoterpene, cyclic terpinene, such as, cyclodecene, 1-phenyl-1-cyclohexene, 1-tert-butyl-1-cyclohexene, terpinolene, γ-terpinene, α-terpinene, a-pinene, terpineol, methyl naphthalene and mixtures thereof. Generally, the solvents are those which are volatile at a temperature below the sintering temperature used for an ink.

In embodiments, the first solvent can be a fused ring system and the optional second solvent is a separate ring system. In embodiments, the solvent(s) are saturated hydrocarbons. Thus, the first saturated solvent can be decahydronaphthalene and the optional second saturated solvent can be bicyclohexyl. In embodiments, the solvents may used in the range of from about 10wt% to about 90wt%, about 20wt% to about 25wt%, about 30wt% to about 35wt%, about 35wt% to about 40wt%, about 20wt% to about 70wt%. In embodiments, decahydronaphthalene can be present from about 20wt% to about 60wt% and bicyclohexyl can be present from about 5wt% to about 30wt%. In embodiments, decahydronaphthalene is present from about 30 to about 35wt% and bicyclohexyl is present from about 13 to about 18wt%.

In embodiments, the ink may include an optional adhesive. In embodiments, the adhesive may include, but is not limited to, latex, polyvinyl alcohol, polyurethane, polysaccharides, N-methylpyrrolidone, N-vinylpyrrolidone, poly(2-hydroxyethyl acrylate), silicones and epoxies. In embodiments, the adhesive is present in an amount of from about 0.05% to about 20% by weight of the total weight of the ink composition, from about 0.1% to about 10%, from about 0.05% to about 5% by weight of the total weight of the ink composition. In embodiments, the adhesive is present in an amount of from about 0.1% to about 3 % by weight of the total weight of the ink composition.

The ink may contain a resin to improve adhesion to substrates. The resin may include terpene resin, styrene block copolymers, such as, styrene-butadiene-styrene, styrene-isoprene-styrene, styrene-ethylene/butylenes-styrene, and styrene-ethylene/propylene, ethylene-vinyl acetate copolymers, ethylene-vinyl acetate-maleic anhydride terpolymers, ethylene butyl acrylate copolymers, ethylene-acrylic acid copolymers, polyolefins, polybutenes, polyamides, and the like and combinations thereof. In embodiments, the resin is present in an amount of from about 0.05% to about 20% by weight of the total weight of the ink composition, from about 0.1% to about 10%, from about 0.05% to about 5% by weight of the total weight of the ink composition.

In embodiments, the substrate or medium may comprise a metal, a metal foil, such as, of molybdenum, aluminum, beryllium, cadmium, cerium, chromium, cobalt, copper, gallium, gold, lead, manganese, molybdenum, nickel, palladium, platinum, rhenium, rhodium, silver, stainless steel, steel, iron, strontium, tin, titanium, tungsten, yttrium, zinc or zirconium, a metal alloy, such as, brass or bronze, a metal silicide, a metal carbide, a polymer, a plastic, a conductive polymer, a copolymer, a polymer blend, a polyethylene terephthalate, a polycarbonate, a polyester, a polyester film, a mylar, a polyvinyl chloride, a polyvinyl fluoride, a polyvinylidene fluoride, a polyethylene, a polyetherimide, a polyethersulfone (PES), a polyetherketone, a polyimide, a polyvinylchloride, an acrylonitrile butadiene styrene polymer, a polytetrafluoroethylene, a polydimethylsiloxane, a silicone, an epoxy, a durable paper, a coated paper, a pozzolana, a clay, a sand, a gravel, a perlite, a vermiculite, a mineral wool, a graphite, an alumino silicate, a mica, a silicon, a glass, a sapphire, an organometal, a cellulose, a wood, a fiber, a bark, a fruit shell, a skin, a ceramic and combinations thereof.

In embodiments, the substrate or medium may be treated, such as, with a chemical, a charge source, a coating polymer and so on prior to deposition of the ink to allow for greater adhesion of the ink to the surface of the medium or substrate to which an ink of interest is applied. The shape and conformation of the substrate, medium or receiving member is not limiting so long as an ink can be applied to, deposited on, placed on, sprayed on and the like on the receiving member, and in embodiments, can be exposed to a sintering temperature.

In embodiments, the record generated by the method as disclosed may contain a coating, where the coating may include, but is not limited to, a polymer. The polymer may be selected from thermoplastic polymers, such as, polymethacrylates, polyphenylene oxide (PPO), polyphenylene sulphide (PPS), polypropylene or polyvinyl chloride (PVC); thermosetting polymers, such as, epoxy resins, polycarbonates, polyimides or polydicyclopentadiene (PDCPD); elastomers, such as, silicones, for instance, polydimethylsiloxane (PDMS), polyurethanes, polyisobutylene, polychloroprene (PCP), polybutadiene or polyisoprene (PI); natural polymers, such as, cellulose, latex or starch; polyesters, such as polyethylene terephthalate (PET); cationic polyelectrolytes; anionic polyelectrolytes; polyketones, such as, poly(aryl ether ketones); polyamides, such as, polyaramides; polyacrylonitriles; polycyanoacrylates; polyethersulphones; polystyrene (PS); polyethylene; polyvinylpyrrolidone (PVP); polyvinyl acetate (PVA or PVAc); crosslinked, branched or star polymers; copolymers; and various dendrimers.

The coating polymer used may be a fluoropolymer or fluorocopolymer such as polytetrafluoroethylene (PTFE), ethylene-tetrafluoroethylene polymer (ETFE), polychlorotrifluoroethylene, perfluoropropylene, poly(heptafluorobutyl acetate), the copolymer of vinylidene fluoride and chlorotrifluoroethylene, the copolymer of vinylidene fluoride and perfluoropropene, the polyester of 2,2,3,3,4,4-hexafluoropentanediol and adipic acid), or 3,3,3-trifluoropropylmethylsilicone.

The polymer may be selected from thermoplastic polymers, such as, polymethyl methacrylate (PMMA) or polyethyl methacrylate (PEMA), cationic polyelectrolytes, such as, poly-L-lysine (PLL) or polyallylamine (PAH), and anionic polyelectrolytes, such as, poly-L-glutamic acid (PGA) or polystyrene sulphonate (PSS).

The polymer used also may be any combination of the polymers taught herein or as known in the art.

The polymer coating may be deposited by conventional methods for depositing a polymer film which are well known to the person skilled in the art, either starting from a polymer in molten form or starting from a solution of the polymer in a suitable solvent as a design choice.

Various means of deposition may be used, including, but not limited to, deposition by centrifugation (conventionally known as "spin-coating"), a deposition by dipping (conventionally known as "dip-coating"), a deposition by droplets (conventionally known as "casting"), a deposition by laminar flow or a deposition by spraying (conventionally known as "aerospray").

The coating of interest can be one which, when dry, set, polymerized, cured and so on is clear or translucent so as to enable a substantially unimpeded view of the image, picture, diagram, lettering and the like comprising a sintered ink product of interest thereunder. The coating can have a glossy finish, a textured finish, a matte finish and so on. The coating can be removable.

As provided herein, the surface of the substrate or medium to be covered or to which the ink is applied optionally can be treated to improve the adhesion of the ink, metal nanoparticles and polymer to the substrate, or of a coating to the substrate, such as a treatment by silanisation, cold plasma exposure or UV exposure under ozone. The different surface treatment techniques also may make it possible to graft onto the surface of the substrate or medium, certain chemical groups, such as, a hydroxyl group or a chain including a silane function, for example, which then will facilitate adhesion of the coating polymer, ink and/or metal nanoparticle, and/or a coating to the substrate or medium.

In embodiments, the process of interest may comprise an additional treatment step after the coating polymer has been deposited, such as, a heat treatment, such as, a postcure of the coating polymer at a temperature above the glass transition temperature of the polymer and so on to enhance durability of the record.

The sintering and/or postcure heating step make it possible to eliminate ink solvent resulting in particulates remaining at the ink placement site, and as provided herein, the residuum is predominantly or substantially metal. By substantially metal or predominantly metal is meant that the metal content remaining of the sintered ink on the substrate is at least about 50wt%, at least about 60wt%, at least about 70wt%, at least about 80wt%, at least about 90wt%, at least about 95wt%, at least about 99wt % and so on.

In embodiments, the ink composition comprises metal nanoparticles and an optional resin coating, and a record comprising an ink composition of interest can comprise an optional coating. In embodiments, the metal nanoparticles comprise a silver. In embodiments, the metal nanoparticles are stabilized metal nanoparticles comprising a metal nanoparticle core and an organic stabilizer shell layer. In embodiments, the nanoparticles are organoamine-stabilized silver nanoparticles. In embodiments, the metal nanoparticles have a metal content of at least about 65wt%, at least about 85wt%, at least about 90wt%.

The nanoparticles may be present in an amount of from about 10% to about 85% by weight of the total weight of the ink composition, from about 20% to about 60% by weight of the total weight of the ink composition.

The metal nanoparticles may have an average diameter of about 100nm or less, about 50nm or less. In embodiments, the nanoparticles have an average diameter of from about 1nm to about 15nm, from about 2nm to about 10nm. The particle size distribution width refers to the difference between the diameter of the largest nanoparticle and the diameter of the smallest nanoparticle, or the range between the smallest and largest nanoparticles. In embodiments, the particle size distribution width of the nanoparticles may be from about 10nm to about 50nm, from about 10nm to about 25nm. In embodiments, the metal nanoparticles have small particle sizes from about 1nm to about 50nm and a narrow size distribution width of from about 1 0nm to about 30nm. In embodiments, a small particle size with a narrow size distribution width facilitates dispersion in the ink and application, for example, through an ink jet nozzle.

The fabrication of conductive elements from the ink compositions of the present disclosure can be carried out using any method which can handle the viscosity of the ink. Inkjet printing can be used. Any type of inkjet printer, including piezoelectric printers, can be used for inkjet printing.

Any suitable jetting conditions may be used to apply the ink composition. In embodiments, the ink is printed with a piezoelectric printer head, with the printer head temperature from about 23°C to about 120°C or from about 23°C to about 65°C. The temperature of the substrate may be from about 23°C to about 80°C or from about 40°C to about 60°C. The drop spacing may be from about 20µm to about 80µm, from about 20µm to about 60µm. In embodiments, the substrate temperature is from about 50°C to about 60°C and the drop spacing is about 40µm. The combination of drop spacing and substrate temperature can influence the width and smoothness of printed lines.

In the case of solid inks, as known in the art, the applied ink generally is substantially liquid and hence the conditions provided above or as known in the art apply thereto. In the case of toners, as known in the art, colorant carriers, such as, resins and other components comprising a toner can be configured to be operable and have the properties of an applied ink as provided herein. Hence, a toner composition would be one which is sintered. In embodiments, the non-colorant components of a metal-bearing toner of interest can on sintering serve a coating function.

To sinter the printed material, heating the deposited nanoparticles may be carried out at a temperature of below about 200°C, below about 150°C, below about 140°C. The heating is performed for a time ranging from for example about 0.1sec to about 10hrs, from about 5min to about 1hr. The heating can be done at a temperature of from about 80°C to about 200°C. In embodiments, the heating is performed at a temperature of from about 130°C to about 150°C. In embodiments, the heating is performed at about 140°C for about 10min.

In embodiments, the use of different metal combinations, such as gold and silver, may be used to introduce different colors to the record as required. For example, gold, silver and copper all show different colors. In embodiments, the difference of a design may be also encoded into conductivity differences using different metal inks. For example, by tuning the amount of polymer resin, such as, a adhesive used in the metal ink composition, the conductivity of a final sintered dot or line can be tuned from totally insulative to highly conductive.

The following Examples are provided to illustrate further various species of the present disclosure, it being noted that the Examples are intended to illustrate and not to limit the scope of the present disclosure.

### EXAMPLES

High throughput silver nanoparticles with around 90wt% silver content were used in this Example. Preparation of the silver nanoparticles was conducted as disclosed previously in U.S. Pat. No. 7,494,608, where the molar ratio of hexadecylamine to silver acetate was about 5:1.

An ink was prepared with 50wt% loading of silver nanoparticles in a solvent mixture, and shaking the silver nanoparticles in the solvent mixture overnight (approximately 16hrs). The solvents used for the ink were a mixture of decahydronaphthalene/bicyclohexane (at weight ratio of about 2:1) (from Sigma-Aldrich, St. Louis, Missouri). The ink was passed through a 1 µm filter.

The inks were tested with an inkjet printer (DMP-2800, equipped with 10pL cartridge, at about 40µm drop spacing) and printed onto a plastic medium (PET and/or PC). In embodiments, a blueprint of an automobile design was copied using the ink onto a PET sheet.

After sintering at 140°C for 10min, silver marks that duplicate the image were fixed on the medium.

The resulting prints were treated with various chemical and physical insults including overnight soaking in water and organic solvents, such as, isopropyl alcohol, toluene and acetone, as well as exposed to electromagnetic radiation, such as, UV irradiation, plasma treatment and mechanical forces, such as, folding and bending, without any noticeable damage, deterioration of image quality or integrity.

The data demonstrate that the excellent stability of silver, in combination with the robustness of a plastic substrate, may be used for the long term preservation of records of interest.

It will be appreciated that several of the above-disclosed and other features and functions, or alternatives thereof, may be desirably combined into many other different systems or applications. Also various presently unforeseen or unanticipated alternatives, modifications, variations or improvements therein may be subsequently made by those skilled in the art, which are also intended to be encompassed by the following claims.

Unless specifically recited in a claim, steps or components of claims should not be implied or imported from the specification or any other claims as to any particular order, number, position, size, shape, angle, color or material.

## Claims

1. A method for preserving records comprising:
a) contacting an ink onto one or more surfaces of a medium to form a record composed of symbols, tracings, blueprints, schematics, graphics, glyphs, dots, formulas, images, pixels, codes, figures, patterns, letters, numbers or combinations thereof, wherein the ink comprises one or more metal nanoparticles containing a metal core selected from the group consisting of a noble metal, a transition metal, a metalloid, a metal alloy and combinations thereof;
and a vehicle;
b) sintering said metal nanoparticles at the one or more contacted surfaces of the medium.

2. The method of claim 1, wherein the ink further comprises an adhesive.

3. The method of claim 2, wherein the adhesive is selected from the group consisting of a terpene resin, styrene-butadiene-styrene copolymer, styreneisoprene-styrene copolymer, styrene-ethylene/butylenes-styrene copolymer, styrene-ethylene/propylene copolymer, ethylene-vinyl acetate copolymer, ethylene-vinyl acetate-maleic anhydride terpolymer, ethylene butyl acrylate copolymer, ethylene-acrylic acid copolymer, a polyolefin, polyvinyl butyral, a polybutene, a polyamide and combinations thereof.

4. The method of any preceding claim further comprising step c) of applying a polymer coating onto the sintered metal on said one or more contacted surfaces, preferably
wherein the polymer coating is selected from the group consisting of polymethyl methacrylate, polyethyl methacrylate, polyphenylene oxide, polyphenylene sulphide, polypropylene, polyvinyl chloride, epoxy resins, polycarbonates (PC), polyimides, polydicyclopentadiene, silicones, polydimethylsiloxane, polyurethanes, polyisobutylene, polychloroprene, polybutadiene, polyisoprene; natural polymers, cellulose, latex, starch, polyesters, polyethylene terephthalate (PET), cationic polyelectrolytes, poly-L-lysine, polyallylamine, anionic polyelectrolytes, poly-L-glutamic acid, polystyrene sulphonate, polyketones, poly(aryl ether ketones), polyamides, polyaramides, polyacrylonitriles, polycyanoacrylates, polyethersulphones (PES), polystyrene, polytetrafluoroethylene, polyethylene, polyvinylpyrrolidone, polyvinyl acetate, crosslinked polymers, branched polymers, star polymers, copolymers, dendrimers and combinations thereof.

5. The method of any preceding claim, wherein the metal core is a noble metal, preferably selected from the group consisting of Ag, Au, Pd, Pt, Rh, Ir, Ru, Os and combinations thereof, more preferably wherein the noble metal is Ag.

6. The method of any of claims 1 to 4, wherein the metal core is a transition, preferably selected from the group consisting of Ti, Cr, Mn, Fe, Co, Ni, Cu, Zn, Nb, Mo, Ta, W, Re and combinations thereof.

7. The method of any preceding claim wherein the metal nanoparticles have an average diameter of from 0.5 nm to 1000 nm, preferably 1 nm to 500 nm.

8. The method of claim any preceding claim, wherein metal content of the ink is at least 50 wt %.

9. The method of any preceding claim, wherein said vehicle comprises a first solvent and an optional second solvent, wherein the first solvent is selected from the group consisting of separate ring systems, combined ring systems, fused ring systems, bridged ring systems and combinations thereof,
and wherein the optional second solvent is selected from the group consisting of an aromatic hydrocarbon containing from 7 to 18 carbon atoms, a linear or a branched aliphatic hydrocarbon containing from 8 to 28 carbon atoms and a cyclic aliphatic hydrocarbon,
preferably wherein the cyclic aliphatic hydrocarbon is selected from the group consisting of a cyclic terpene, a cyclic terpinene and a substituted cyclohexane,
more preferably, wherein the first solvent is decahydronaphthalene and the optional second solvent is bicyclohexyl.

10. The method of any preceding claim, wherein the metal nanoparticles further comprise a stabilizer on the surface, wherein the stabilizer having a formula of X-Y wherein X is a hydrocarbon group comprising from about 4 carbon atoms to about 24 carbon atoms, and wherein Y is a functional group attached to a surface of the metal nanoparticle selected from the group consisting of hydroxyl, amine, carboxylic acid, thiol, thiol derivatives, xanthic acid, pyridine, pyrrolidone, carbamate and mixtures thereof.

11. The method of any preceding claim, wherein the medium is selected from the group consisting of a metal, a metal foil, molybdenum, aluminum, beryllium, cadmium, cerium, chromium, cobalt, copper, gallium, gold, lead, manganese, molybdenum, nickel, palladium, platinum, rhenium, rhodium, silver, stainless steel, steel, iron, strontium, tin, titanium, tungsten, yttrium, zinc, zirconium, a metal alloy, brass, bronze, a metal silicide, a metal carbide, a polymer, a plastic, a conductive polymer, a copolymer, a polymer blend, a polyethylene terephthalate, a polycarbonate, a polyester, a polyester film, a mylar, a polyvinyl chloride, a polyvinyl fluoride, polyvinylidene fluoride, a polyethylene, a polyetherimide, a polyethersulfone (PES), a polyetherketone, a polyimide, an acrylonitrile butadiene styrene polymer, a polytetrafluoroethylene, a polydimethylsiloxane, a silicone, an epoxy, a paper, a coated paper, a pozzolana, a clay, a sand, a gravel, a perlite, a vermiculite, a mineral wool, a graphite, an aluminosilicate, a mica, a silicon, a glass, a sapphire, an organometal, a cellulose, a wood, a fiber, a bark, a fruit shell, a skin, a ceramic and combinations thereof, preferably wherein the medium is selected from the group consisting of a polycarbonate (PC), a PEEK a polyethylene terephthalate (PET), a PEN, a polyimide, a polyurethane and a PES.

12. The method of any preceding claim, wherein the contacting is by printing the ink onto the medium via an inkjet printer.

13. The method of any preceding claim, wherein the sintering is performed at a temperature below 200 °C, preferably at a temperature in the range of from 80 °C to 200 °C.

14. The method of any preceding claim, wherein the sintering is performed for a time ranging from 0.1 seconds to 10 hours, preferably 5 minutes to 1 hour.

15. A printed record on a medium produced by the method according to any preceding claim, wherein an ink residuum dried or sintered thereon is predominantly metal, preferably wherein the ink residuum dried or sintered thereon has a metal content of at least 80% by weight.

## Patentansprüche

1. Verfahren zum Konservieren von Aufzeichnungen umfassend:
a) in Kontakt bringen einer Tinte mit einer oder mehreren Oberflächen eines Mediums, um eine Aufzeichnung zu bilden, die sich aus Symbolen, Markierungen, technischen Zeichnungen, Schemata, Grafiken, Bildzeichen, Punkten, Formeln, Bildern, Pixeln, Codes, Abbildungen, Mustern, Buchstaben, Zahlen oder Kombinationen davon zusammensetzt, wobei die Tinte ein oder mehrere Metallnanopartikel, die einen Metallkern enthalten, der ausgewählt ist aus der Gruppe bestehend aus einem Edelmetall, einem Übergangsmetall, einem Metalloid, einer Metalllegierung und Kombinationen davon;
und einen Tintenträger umfasst;
b) Sintern der Metallnanopartikel an der einen oder den mehreren kontaktierten Oberflächen des Mediums.

2. Verfahren nach Anspruch 1, wobei die Tinte außerdem einen Klebstoff umfasst.

3. Verfahren nach Anspruch 2, wobei der Klebstoff ausgewählt ist aus der Gruppe bestehend aus einem Terpenharz, Styrol-Butadien-Styrol-Copolymer, Styrol-Isopren-Styrol-Copolymer, Styrol-Ethylen/Butylene-Styrol-Copolymer, Styrol-Ethylen/Propylen-Copolymer, Ethylen-Vinylacetat-Copolymer, Ethylen-Vinylacetat-Maleinsäureanhydrid-Terpolymer, Ethylen-Butylacrylat-Copolymer, Ethylen-Acrylsäure-Copolymer, einem Polyolefin, Polyvinylbutyral, einem Polybuten, einem Polyamid und Kombinationen davon.

4. Verfahren nach einem vorangehenden Anspruch, außerdem umfassend Schritt c) des Aufbringens einer Polymerbeschichtung auf das gesinterte Metall an der einen oder den mehreren kontaktierten Oberflächen, vorzugsweise
wobei die Polymerbeschichtung ausgewählt ist aus der Gruppe bestehend aus Polymethylmethacrylat, Polyethylmethacrylat, Polyphenylenoxid, Polyphenylensulfid, Polypropylen, Polyvinylchlorid, Epoxidharzen, Polycarbonaten (PC), Polyimiden, Polydicyclopentadien, Siliconen, Polydimethylsiloxan, Polyurethanen, Polyisobutylen, Polychloropren, Polybutadien, Polyisopren; natürlichen Polymeren, Cellulose, Latex, Stärke, Polyestern, Polyethylenterephthalat (PET), kationischen Polyelektrolyten, Poly-L-lysin, Polyallylamin, anionischen Polyelektrolyten, Poly-L-glutaminsäure, Polystyrolsulfonat, Polyketonen, Poly(aryletherketonen), Polyamiden, Polyaramiden, Polyacrylnitrilen, Polycyanoacrylaten, Polyethersulfonen (PES), Polystyrol, Polytetrafluorethylen, Polyethylen, Polyvinylpyrrolidon, Polyvinylacetat, vernetzten Polymeren, verzweigten Polymeren, Sternpolymeren, Copolymeren, Dendrimeren und Kombinationen davon.

5. Verfahren nach einem vorangehenden Anspruch, wobei der Metallkern ein Edelmetall ist, vorzugsweise ausgewählt aus der Gruppe bestehend aus Ag, Au, Pd, Pt, Rh, Ir, Ru, Os und Kombinationen davon, mehr bevorzugt wobei das Edelmetall Ag ist.

6. Verfahren nach einem der Ansprüche 1 bis 4, wobei der Metallkern ein Übergangsmetall ist, vorzugsweise ausgewählt aus er Gruppe bestehend aus Ti, Cr, Mn, Fe, Co, Ni, Cu, Zn, Nb, Mo, Ta, W, Re und Kombinationen davon.

7. Verfahren nach einem vorangehenden Anspruch, wobei die Metallnanopartikel einen mittleren Durchmesser von 0,5 nm bis 1000 nm, vorzugsweise 1 nm bis 500 nm aufweisen.

8. Verfahren nach einem vorangehenden Anspruch, wobei der Metallgehalt der Tinte wenigstens 50 Gew.-% beträgt.

9. Verfahren nach einem vorangehenden Anspruch, wobei der Tintenträger ein erstes Lösungsmittel und ein optionales zweites Lösungsmittel umfasst, wobei das erste Lösungsmittel ausgewählt ist aus der Gruppe bestehend aus getrennten Ringsystemen, kombinierten Ringsystemen, kondensierten Ringsystemen, verbrückten Ringsystemen und Kombinationen davon,
und wobei das optionale zweite Lösungsmittel ausgewählt ist aus der Gruppe bestehend aus einem aromatischen Kohlenwasserstoff, der 7 bis 18 Kohlenstoffatome enthält, einem linearen oder einem verzweigten aliphatischen Kohlenwasserstoff, der 8 bis 28 Kohlenstoffatome enthält, und einem cyclischen aliphatischen Kohlenwasserstoff,
wobei der cyclische aliphatische Kohlenwasserstoff vorzugsweise ausgewählt ist aus der Gruppe bestehend aus einem cyclischen Terpen, einem cyclischen Terpinen und einem substituierten Cyclohexan,
wobei stärker bevorzugt das erste Lösungsmittel Decahydronaphthalin ist und das optionale zweite Lösungsmittel Bicyclohexyl ist.

10. Verfahren nach einem vorangehenden Anspruch, wobei die Metallnanopartikel außerdem einen Stabilisator auf der Oberfläche umfassen, wobei der Stabilisator eine Formel X-Y aufweist, wobei X eine Kohlenwasserstoffgruppe ist, die ungefähr 4 Kohlenstoffatome bis ungefähr 24 Kohlenstoffatome umfasst, und wobei Y eine funktionelle Gruppe ist, die an eine Oberfläche des Metallnanopartikels gebunden ist, ausgewählt aus der Gruppe bestehend aus Hydroxyl, Amin, Carbonsäure, Thiol, Thiolderivaten, Xanthogensäure, Pyridin, Pyrrolidon, Carbamat und Mischungen davon.

11. Verfahren nach einem vorangehenden Anspruch, wobei das Medium ausgewählt ist aus der Gruppe bestehend aus einem Metall, einer Metallfolie, Molybdän, Aluminium, Beryllium, Cadmium, Cer, Chrom, Cobalt, Kupfer, Gallium, Gold, Blei, Mangan, Molybdän, Nickel, Palladium, Platin, Rhenium, Rhodium, Silber, Edelstahl, Stahl, Eisen, Strontium, Zinn, Titan, Wolfram, Yttrium, Zink, Zirconium, einer Metalllegierung, Messing, Bronze, einem Metallsilicid, einem Metallcarbid, einem Polymer, einem Kunststoff, einem leitfähigen Polymer, einem Copolymer, einer Polymermischung, einem Polyethylenterephthalat, einem Polycarbonat, einem Polyester, einer Polyesterfolie, einem Mylar, einem Polyvinylchlorid, einem Polyvinylfluorid, Polyvinylidenfluorid, einem Polyethylen, einem Polyetherimid, einem Polyethersulfon (PES), einem Polyetherketon, einem Polyimid, einem Acrylnitril-Butadien-Styrol-Polymer, einem Polytetrafluorethylen, einem Polydimethylsiloxan, einem Silicon, einem Epoxidharz, einem Papier, einem gestrichenen Papier, einer Pozzolanerde, einem Ton, einem Sand, einem Kies, einem Perlit, einem Vermiculit, einer Mineralwolle, einem Graphit, einem Aluminiumsilicat, einem Glimmer, einem Silicium, einem Glas, einem Saphir, einer Organometallverbindung, einer Cellulose, einem Holz, einer Faser, einer Rinde, einer Fruchtschale, einer Haut, einer Keramik und Kombinationen davon, wobei das Medium vorzugsweise ausgewählt ist aus der Gruppe bestehend aus einem Polycarbonat (PC), einem PEEK, einem Polyethylenterephthalat (PET), einem PEN, einem Polyimid, einem Polyurethan und einem PES.

12. Verfahren nach einem vorangehenden Anspruch, wobei das in Kontakt bringen durch Drucken der Tinte auf das Medium mittels eines Tintenstrahldruckers erfolgt.

13. Verfahren nach einem vorangehenden Anspruch, wobei das Sintern bei einer Temperatur unter 200°C, vorzugsweise bei einer Temperatur im Bereich von 80°C bis 200°C durchgeführt wird.

14. Verfahren nach einem vorangehenden Anspruch, wobei das Sintern während eines Zeitraums im Bereich von 0,1 Sekunden bis 10 Stunden, vorzugsweise 5 Minuten bis 1 Stunde durchgeführt wird.

15. Gedruckte Aufzeichnung auf einem Medium, hergestellt durch das Verfahren nach einem vorangehenden Anspruch, wobei ein darauf getrockneter oder gesinterter Tintenrückstand überwiegend Metall ist, wobei der darauf getrocknete oder gesinterte Tintenrückstand vorzugsweise einen Metallgehalt von wenigstens 80 Gew.-% aufweist.

## Revendications

1. Procédé pour conserver des enregistrements comprenant le fait :
a) de mettre en contact une encre sur une ou plusieurs surface(s) d'un support pour former un enregistrement composé de symboles, de tracés, de plans, de schémas, de graphiques, de glyphes, de points, de formules, d'images, de pixels, de codes, de figures, de motifs, de lettres, de numéros ou de combinaisons de ceux-ci, dans lequel l'encre comprend une ou plusieurs nanoparticule(s) métallique(s) contenant un noyau métallique choisi dans le groupe constitué d'un métal noble, d'un métal de transition, d'un métalloïde, d'un alliage métallique et de combinaisons de ceux-ci ;
et un véhicule ;
b) de fritter lesdites nanoparticules métalliques au niveau de la ou des plusieurs surface(s) de contact du support.

2. Procédé de la revendication 1, dans lequel l'encre comprend en outre un adhésif.

3. Procédé de la revendication 2, dans lequel l'adhésif est choisi dans le groupe constitué d'une résine terpénique, d'un copolymère styrène-butadiène-styrène, d'un copolymère styrène-isoprène-styrène, d'un copolymère styrène-éthylène/butylènes-styrène, d'un copolymère styrène-éthylène/propylène, d'un copolymère éthylène-acétate de vinyle, d'un terpolymère éthylène-acétate de vinyle-anhydride maléique, d'un copolymère d'éthylène et d'acrylate de butyle, d'un copolymère éthylène-acide acrylique, d'une polyoléfine, d'un polybutyral de vinyle, d'un polybutène, d'un polyamide et de combinaisons de ceux-ci.

4. Procédé de l'une des revendications précédentes, comprenant en outre l'étape c) qui consiste à appliquer un revêtement polymère sur le métal fritté sur ladite ou lesdites plusieurs surface(s) de contact, de préférence
dans lequel le revêtement polymère est choisi dans le groupe constitué de polyméthacrylate de méthyle, de polyméthacrylate d'éthyle, d'oxyde de polyphénylène, de polysulfure de phénylène, de polypropylène, de polychlorure de vinyle, de résines époxy, de polycarbonates (PC), de polyimides, de polydicyclopentadiène, de silicones, de polydiméthylsiloxane, de polyuréthanes, de polyisobutylène, de polychloroprène, de polybutadiène, de polyisoprène ; de polymères naturels, de cellulose, de latex, d'amidon, de polyesters, de polyéthylène téréphtalate (PET), de polyélectrolytes cationiques, de poly-L-lysine, polyallylamine, de polyélectrolytes anioniques, d'acide poly-L-glutamique, de polystyrène sulfonate, de polycétones, de poly(aryléthercétones), de polyamides, de polyaramides, de polyacrylonitriles, de polycyanoacrylates, de polyéthersulfones (PES), de polystyrène, de polytétrafluoroéthylène, de polyéthylène, de polyvinylpyrrolidone, de polyacétate de vinyle, de polymères réticulés, de polymères ramifiés, de polymères en étoile, de copolymères, de dendrimères et de combinaisons de ceux-ci.

5. Procédé de l'une des revendications précédentes, dans lequel le noyau métallique est un métal noble, de préférence choisi dans le groupe constitué de Ag, Au, Pd, Pt, Rh, Ir, Ru, Os et de combinaisons de ceux-ci, plus préférablement dans lequel le métal noble est l'Ag.

6. Procédé de l'une des revendications 1 à 4, dans lequel le noyau métallique est une transition, de préférence choisie dans le groupe constitué de Ti, Cr, Mn, Fe, Co, Ni, Cu, Zn, Nb, Mo, Ta, W, Re et de combinaisons de ceux-ci.

7. Procédé de l'une des revendications précédentes, dans lequel les nanoparticules métalliques ont un diamètre moyen allant de 0,5 nm à 1000 nm, de préférence allant de 1 nm à 500 nm.

8. Procédé de l'une des revendications précédentes, dans lequel la teneur en métal de l'encre est d'au moins 50% en poids.

9. Procédé de l'une des revendications précédentes, dans lequel ledit véhicule comprend un premier solvant et un deuxième solvant facultatif, dans lequel le premier solvant est choisi dans le groupe constitué de systèmes cycliques séparés, de systèmes cycliques combinés, de systèmes cycliques fusionnés, de systèmes cycliques pontés et des combinaisons de ceux-ci,
et dans lequel le deuxième solvant facultatif est choisi dans le groupe constitué d'un hydrocarbure aromatique contenant de 7 à 18 atomes de carbone, d'un hydrocarbure aliphatique linéaire ou ramifié contenant de 8 à 28 atomes de carbone et d'un hydrocarbure aliphatique cyclique,
de préférence dans lequel l'hydrocarbure aliphatique cyclique est choisi dans le groupe constitué d'un terpène cyclique, d'un terpinène cyclique et d'un cyclohexane substitué,
plus préférablement, dans lequel le premier solvant est le décahydronaphtalène et le deuxième solvant facultatif est le bicyclohexyle.

10. Procédé de l'une des revendications précédentes, dans lequel les nanoparticules métalliques comprennent en outre un stabilisant sur la surface, dans lequel le stabilisant ayant une formule X-Y où X est un groupe hydrocarboné comprenant d'environ 4 atomes de carbone à environ 24 atomes de carbone, et où Y est un groupe fonctionnel fixé à une surface de la nanoparticule métallique choisie dans le groupe constitué d'hydroxyle, d'amine, d'acide carboxylique, de thiol, de dérivés de thiol, d'acide xanthique, de pyridine, de pyrrolidone, de carbamate et de mélanges de ceux-ci.

11. Procédé de l'une des revendications précédentes, dans lequel le support est choisi dans le groupe constitué d'un métal, d'une feuille métallique, de molybdène, d'aluminium, de béryllium, de cadmium, de cérium, de chrome, de cobalt, de cuivre, de gallium, d'or, de plomb, de manganèse, de molybdène, de nickel, de palladium, de platine, de rhénium, de rhodium, d'argent, d'acier inoxydable, d'acier, de fer, de strontium, d'étain, de titane, de tungstène, d'yttrium, de zinc, de zirconium, d'un alliage métallique, de laiton, de bronze, d'un siliciure métallique, d'un carbure métallique, d'un polymère, d'une matière plastique, d'un polymère conducteur, d'un copolymère, d'un mélange de polymères, d'un polyéthylène téréphtalate, d'un polycarbonate, d'un polyester, d'un film de polyester, d'un mylar, d'un polychlorure de vinyle, d'un polyfluorure de vinyle, d'un polyfluorure de vinylidène, d'un polyéthylène, d'un polyétherimide, d'une polyéthersulfone (PES), d'une polyéthercétone, d'un polyimide, d'un polymère acrylonitrile-butadiène-styrène, d'un polytétrafluoroéthylène, d'un polydiméthylsiloxane, d'une silicone, d'un époxy, d'un papier, d'un papier couché, d'une pouzzolane, d'une argile, d'un sable, d'un gravier, d'une perlite, d'une vermiculite, d'une laine minérale, d'un graphite, d'un aluminosilicate, d'un mica, d'un silicium, d'un verre, d'un saphir, d'un composé organométallique, d'une cellulose, d'un bois, d'une fibre, d'une écorce, d'une coque de fruit, d'une peau , d'une céramique et de combinaisons de ceux-ci, de préférence dans lequel le support est choisi dans le groupe constitué d'un polycarbonate (PC), d'une PEEK, d'un polyéthylène téréphtalate (PET), d'un PEN, d'un polyimide, d'un polyuréthane et d'une PES.

12. Procédé de l'une des revendications précédentes, dans lequel la mise en contact se fait par l'impression de l'encre sur le support par l'intermédiaire d'une imprimante à jet d'encre.

13. Procédé de l'une des revendications précédentes, dans lequel le frittage est effectué à une température inférieure à 200°C, de préférence à une température dans la plage allant de 80°C à 200°C.

14. Procédé de l'une des revendications précédentes, dans lequel le frittage est effectué pendant une durée allant de 0,1 seconde à 10 heures, de préférence allant de 5 minutes à 1 heure.

15. Enregistrement imprimé sur un support produit par le procédé selon l'une des revendications précédentes, dans lequel un résidu d'encre séché ou fritté sur celui-ci est principalement métallique, de préférence dans lequel le résidu d'encre séché ou fritté sur celui-ci a une teneur en métal d'au moins 80% en poids.
